# EUROPEAN PATENT SPECIFICATION

(11) **EP 3 135 793 B1**
(45) Date of publication and mention of the grant of the patent: **29.01.2020**
(21) Application number: 15783783.2
(22) Date of filing: 02.03.2015
(51) Int. Cl.: C23C 22/00, C23C 22/08, C23C 22/12, C23C 22/18, C23C 22/20, C23C 22/22, C23C 22/74

(54) **TREATMENT SOLUTION FOR CHROMIUM-FREE INSULATING COATING FOR GRAIN-ORIENTED ELECTRICAL STEEL SHEET AND GRAIN-ORIENTED ELECTRICAL STEEL SHEET COATED WITH CHROMIUM-FREE INSULATING COATING**
BEHANDLUNGSLÖSUNG FÜR CHROMFREIE ISOLIERBESCHICHTUNG FÜR KORNORIENTIERTES ELEKTROSTAHLBLECHE UND KORNORIENTIERTES ELEKTROSTAHLBLECH MIT CHROMFREIER ISOLIERBESCHICHTUNG
LIQUIDE DE TRAITEMENT PERMETTANT LA FORMATION D'UN FILM DE REVÊTEMENT ISOLANT EXEMPT DE CHROME SUR UNE TÔLE D'ACIER ÉLECTROMAGNÉTIQUE À GRAINS ORIENTÉS ET TÔLE D'ACIER ÉLECTROMAGNÉTIQUE À GRAINS ORIENTÉS REVÊTUE D'UN FILM ISOLANT EXEMPT DE CHROME

(30) Priority: 24.04.2014 JP 2014090560
(43) Date of publication of application: 01.03.2017
(73) Proprietor: JFE Steel Corporation, Tokyo 100-0011 (JP)
(72) Inventor: TERASHIMA, Takashi, Tokyo 100-0011 (JP); WATANABE, Makoto, Tokyo 100-0011 (JP); UESAKA, Masanori, Tokyo 100-0011 (JP); SUEHIRO, Ryuichi, Tokyo 100-0011 (JP); TAKAMIYA, Toshito, Tokyo 100-0011 (JP)
(74) Representative: Hoffmann Eitle
(86) International application number: PCT/JP2015/001087
(87) International publication number: WO 2015/162837

(56) References cited:
- EP-A1- 1 811 053
- EP-A1- 2 182 091
- JP-A- S5 675 579
- JP-A- S5 675 579
- JP-A- S54 143 737
- JP-A- S54 143 737
- JP-A- 2000 178 760
- JP-A- 2007 023 329
- JP-A- 2008 240 080
- JP-A- 2009 013 467

## Description

### TECHNICAL FIELD

The disclosure relates to a treatment solution for chromium-free insulating coating for a grain-oriented electrical steel sheet and particularly to a treatment solution for chromium-free insulating coating that effectively prevents the reduction in moisture absorption resistance which used to inevitably occur when coating the surface of a grain-oriented electrical steel sheet with chromium-free coating and enables achieving excellent moisture absorption resistance equivalent to that of insulating coating containing chromium.
Further, the disclosure relates to a grain-oriented electrical steel sheet coated with chromium-free insulating coating provided with chromium-free insulating coating formed using the above treatment solution for chromium-free insulating coating.

### BACKGROUND

For a grain-oriented electrical steel sheet, coating is generally applied on the surface of the steel sheet for the purpose of imparting insulation properties, workability, rust resistance and the like. Such surface coating comprises a base film mainly composed of forsterite formed during final annealing and a phosphate-based top coating formed thereon.
Since these coatings are formed at a high temperature, and have a low thermal expansion coefficient, tension is imparted to the steel sheet due to the difference between the thermal expansion coefficient of the steel sheet and those of the coatings when the steel sheet temperature is lowered to room temperature, and an effect of iron loss reduction can be obtained. Therefore, it is desirable to impart as much tension as possible to the steel sheet.

To satisfy such demands, various types of coatings have been conventionally proposed.
For example, JPS5652117B (PTL 1) proposes a coating mainly composed of magnesium phosphate, colloidal silica, and chromic anhydride. Further, JPS5328375B (PTL 2) proposes a coating mainly composed of aluminum phosphate, colloidal silica, and chromic anhydride.

Meanwhile, due to the growing interest in environmental preservation in recent years, there has been an increasing demand for products containing no harmful substances such as chromium, lead and the like and there has been a demand for development of chromium-free coating for grain-oriented electrical steel sheets as well. However, with chromium-free coating, there were problems such as the significant reduction in moisture absorption resistance and insufficiency in the imparted tension, and therefore, it was difficult to achieve such chromium-free coating.

As methods for resolving the above problems, coating formation methods using treatment solutions containing colloidal silica, aluminum phosphate, boric acid, and sulfate were proposed in JPS54143737B (PTL 3) and JPS579631B (PTL 4). With these methods, the moisture absorption resistance and the iron loss reduction effect obtained by imparting tension were improved. However, with these methods alone, the improving effect in iron loss properties and moisture absorption resistance was not sufficient, compared to when coating containing chromium is formed.

Under the situation, attempts such as increasing colloidal silica in the treatment solution were made to solve these problems. This way, the issue of insufficiency in the imparted tension was resolved and the iron loss reduction effect increased. However, the moisture absorption resistance decreased. An attempt of increasing the additive amount of sulfate was also made. However, in this case, although the moisture absorption resistance was improved, the imparted tension was insufficient, and the obtained iron loss reduction effect was not sufficient. In either case, it was not possible to satisfy both characteristics at the same time.

As chromium-free coating formation methods other than the above, for example, a method of adding a boron compound instead of a chromium compound has been proposed in JP2000169973A (PTL 5). Further, a method of adding an oxide colloid has been proposed in JP2000169972A (PTL 6). Moreover, a method of adding a metal organic acid salt has been proposed in JP2000178760A (PTL 7).
However, even by using any of the above techniques, it was not possible to enhance both the moisture absorption resistance and the iron loss reduction effect obtained by imparting tension, to the same level as when coating containing chromium is formed, and these techniques could not be perfect solutions.

Further, JP200723329A (PTL 8) and JP200957591A (PTL 9) describe techniques similar in some respects to that of the disclosure. PTL 8 describes a technique of containing a colloidal compound containing metallic elements such as Fe, Al, Ga, Ti, Zr and the like for the purpose of preventing hydration. Further, PTL 9 describes a technique of improving moisture absorption resistance by using Ti chelate.

EP 2 182 091 A1 (PTL 10) relates to a treatment solution for insulation coating for grain oriented electrical steel sheet, comprising at least one of phosphates of Mg, Ca, Ba, Sr, Zn, Al, and Mn, colloidal silica, and at least one permanganate of Mg, Sr, Zn, Ba, and Ca.

EP 1 811 753 A1 (PTL 11) relates to a method of manufacturing a grain-oriented electrical steel sheet, including the formation of a phosphate-based over coating on the steel sheet.

JP S5675579 A1 (PTL 12) relates to a coating solution for forming a chromium -free top coating insulation film. The coating solution contains specific proportions of colloidal silica, magnesium phosphate and one or more of a sulfate of Mg, Al, Mn and Zn.

### CITATION LIST

### Patent Literature

PTL 1: JPS5652117B
PTL 2: JPS5328375B
PTL 3: JPS54143737B
PTL 4: JPS579631B
PTL 5: JP2000169973A
PTL 6: JP2000169972A
PTL 7: JP2000178760A
PTL 8: JP200723329A
PTL 9: JP200957591A
PTL 10: EP 2 182 091 A1
PTL 11: EP 1 811 053 A1
PTL 12: JP S56 75579 A1

### SUMMARY

### (Technical Problem)

However, the technique described in PTL 8 has a problem in long-term moisture absorption resistance. Further, the technique described in PTL 9 has a problem in that the costs increase due to the use of Ti chelate.

This disclosure has been developed in light of the above circumstances. It could be helpful to provide a treatment solution for chromium-free insulating coating for a grain-oriented electrical steel sheet that can simultaneously achieve excellent moisture absorption resistance and a high iron loss reduction effect obtained by imparting sufficient tension, by using or without using a necessary minimum amount of an inexpensive Ti source instead of expensive Ti chelate.
It could also be helpful to provide a grain-oriented electrical steel sheet coated with chromium-free insulating coating provided with chromium-free insulating coating formed using the above treatment solution for chromium-free insulating coating.

### (Solution to Problem)

In order to solve the above problems and achieve a desirable moisture absorption resistance and an iron loss reduction effect obtained by imparting tension using a chromium-free insulating coating, we made intensive research and studies.
As a result, it was found that the reason the long-term moisture absorption resistance is poor even if the technique described in PTL 8 is applied is that the contents of metallic elements such as Fe, Al, Ga, Ti, and Zr are not sufficient. Due to the fact that, with the contents in the insulating coating being the same, Ti has the second highest effect of improving moisture absorption resistance after Cr, an attempt was made to increase the Ti content in the technique described in PTL 8. As a result, it was revealed that crystallization occurs, and results in a decrease in tension obtained from the insulating coating and cloudiness in the color tone of the insulating coating.

In view of the above, we focused on the fact that most conventionally known phosphate based insulating coatings are metaphosphate compositions (i.e. when M = bivalent metal, M/P = 0.5), and made intensive studies on coating characteristics in regions in which the M/P ratio is larger than 0.5. As a result, we discovered that, by setting the ratio of metal M and phosphorus (M/P) in phosphate so that M is rich, the moisture absorption resistance of the insulating coating is improved, and therefore Ti may be contained in a small amount or not contained at all.

The treatment solution for chromium-free insulating coating for grain-oriented electrical steel sheet according to claim 1 contains one or more of a Mg phosphate, Ca phosphate, Ba phosphate, Sr phosphate, Zn phosphate, Al phosphate, and Mn phosphate and Ti in an amount of 25 parts by mass or less per 100 parts by mass of the phosphate in terms of TiO₂, wherein
colloidal silica is contained in an amount of 50 parts by mass to 120 parts by mass per 100 parts by mass of the phosphate in terms of solid content of SiO₂, and a water-soluble metal salt of Mg, Ca, Ba, Sr, Zn, Al, and Mn is contained to adjust the molar ratio between M²⁺ (= Mg, Ca, Ba, Sr, Zn, Mn) and/or M³⁺ (= Al) which are metallic elements contained in the treatment solution and P to a range of 0.6 ≤ (M²⁺ + 1.5 × M³⁺)/P ≤ 1.0,
wherein the water-soluble metal salt is one or more of nitrate, acetate, and chloride.

The treatment solution for chromium-free insulating coating grain-oriented electrical steel sheet preferably contains TiO₂ sol as a Ti source.

Preferably, in the TiO₂ sol contained in the treatment solution for chromium-free insulating coating for grain-oriented electrical sheet, titanium phosphate is contained in a solid mass ratio of 0.1 % to 50% with respect to TiO₂.

A grain-oriented electrical steel sheet with chromium-free insulating coating according to claim 4 is obtained by applying the treatment solution on a surface of a grain-oriented electrical steel sheet subjected to final annealing and performing baking treatment at a temperature of 800 °C or higher and 1000 °C or lower for 10 seconds to 300 seconds.

### (Advantageous Effect)

Chromium-free insulating coating that provides excellent moisture absorption resistance for a long period and has a sufficient iron loss reduction effect can be obtained at low cost while minimizing the amount of expensive Ti such as Ti chelate used or without using such expensive Ti at all.

### DETAILED DESCRIPTION

Hereinbelow, reference will be made to the experimental results which served as the basis of the disclosure.
First, samples were produced in the following way.
Grain-oriented electrical steel sheets subjected to final annealing with sheet thickness of 0.23 mm which were produced by a conventional method were sheared into a size of 300 mm × 100 mm. The unreacted annealing separator was removed and then the steel sheets were subjected to stress relief annealing in an atmosphere of N₂ at 800 °C for 2 hours.
The samples were then subjected to light pickling with 5 % phosphoric acid, and then the following treatment solution for insulating coating was applied.
First, 100 parts by mass of an aqueous solution of primary magnesium phosphate in terms of solid content, 66.6 parts by mass of colloidal silica in terms of solid content, and magnesium nitrate were added so that M (= Mg²⁺)/P (molar ratio) is as shown in Table 1, and this was applied so that the total coating amounts of both surfaces after drying were 10 g/m². Then, the samples were charged into the drying furnace at 300 °C for 1 minute, and then subjected to heat treatment at 800 °C for 2 minutes in an atmosphere of N₂: 100 % for the purpose of both flattening annealing and baking for insulating coating formation. Subsequently, the samples were subjected to the second stress relief annealing at 800 °C for 2 hours in an atmosphere of N₂.

The iron loss reduction effect obtained by imparting tension and moisture absorption resistance of the samples thus obtained were examined.
The iron loss reduction effect was evaluated based on magnetic properties measured using an SST tester (single sheet magnetism tester). Measurement of magnetic properties was performed for each sample right before applying the treatment solution for insulating coating, after baking for insulating coating formation, and right after subjecting the samples to the second stress relief annealing.
Moisture absorption resistance was evaluated by performing an elution test of phosphorus. In this test, three sample pieces having a size of 50 mm × 50 mm were cut out from steel sheets right after baking for insulating coating formation. These sample pieces were boiled in distilled water at 100 °C for 5 minutes to elute phosphorus from the surface of the insulating coating, and based on the amount of eluted phosphorus, the solubility of insulating coating to water was determined.

Table 1 shows the results of examining magnetic properties, elution amounts of phosphorus and coating appearance.
The criteria in the table are as follows.
- B₈ (R) before application: magnetic flux density right before application of treatment solution for insulating coating
- ΔB after application = B₈ (C) - B₈ (R) where B₈ (C): magnetic flux density right after baking for insulating coating formation
- ΔB after stress relief annealing = B₈ (A) - B₈ (R) where B₈ (A): magnetic flux density right after second stress relief annealing
- W_{17/50} (R): iron loss right before application of treatment solution for insulating coating
- ΔW after application = W_{17/50} (C) - W_{17/50} (R) where W_{17/50} (C): iron loss right after baking for insulating coating formation
- ΔW after stress relief annealing = W_{17/50} (A) - W_{17/50} (R) where W_{17/50} (A): iron loss right after second stress relief annealing
- Elution amount of phosphorus: amount measured right after baking for insulating coating formation
- Coating appearance: degree of transparency of insulating coating after stress relief annealing determined by visual observation

### [Table 1]

**Table 1**

| No. | additive amount of magnesium nitrate hexahydrate (g) | M/P | B₈ (R) before application (T) | ΔB after application (T) | ΔB after stress relief annealing (T) | W_{17/50} (R) before application (W/kg) | ΔW after application (W/kg) | ΔW after stress relief annealing (W/kg) | elution amount of P (µg/150cm²) | coating appearance |
|---|---|---|---|---|---|---|---|---|---|---|
| 1 | 0 | 0.50 | 1.910 | -0.010 | -0.009 | 0.832 | -0.032 | -0.035 | 3000 | transparent |
| 2 | 16.7 | 0.57 | | -0.010 | -0.009 | | -0.030 | -0.035 | 1000 | transparent |
| 3 | 33.3 | 0.64 | | -0.010 | -0.009 | | -0.031 | -0.032 | 80 | transparent |
| 4 | 50.0 | 0.71 | | -0.010 | -0.009 | | -0.030 | -0.031 | 78 | transparent |
| 5 | 100 | 0.93 | | -0.010 | -0.009 | | -0.028 | -0.030 | 80 | transparent |
| 6 | 133 | 1.07 | | -0.010 | -0.009 | | -0.020 | 0.020 | 81 | clouded |

As it is clear from the experimental results presented in Table 1, it was found that by setting M/P so that it is on the magnesium rich side (M/P > 0.50), both iron loss properties and moisture absorption resistance can be improved, although if magnesium is excessive, the coating appearance becomes cloudy due to crystallization and causes iron loss deterioration after strain relief annealing due to tension deterioration.

Reasons for limitations on the features of the disclosure will be explained below.
The steel types of the steel sheets contemplated herein are not particularly limited as long as they are grain-oriented electrical steel sheets. Generally, such grain-oriented electrical steel sheets are produced by subjecting silicon-containing steel slabs to hot rolling with a known method to obtain hot rolled steel sheets, subjecting the hot rolled steel sheets to cold rolling once or multiple times with intermediate annealing performed therebetween to obtain cold rolled steel sheets with final sheet thickness, subjecting the cold rolled steel sheets to primary recrystallization annealing, applying an annealing separator thereon, and then subjecting the cold rolled steel sheets to final annealing.

Regarding the components of the treatment solution for insulating coating, one or more of a Mg phosphate, Ca phosphate, Ba phosphate, Sr phosphate, Zn phosphate, Al phosphate, and Mn phosphate are used as the phosphate. While it is normal to use one of the above phosphates, two or more of them may be mixed and used to precisely control the property values of the insulating coating. As the type of phosphate, primary phosphate (biphosphate) is easily available and is therefore preferable. Since phosphates of alkali metal (Li, Na or the like) are significantly poor in the moisture absorption resistance, they are unsuitable.

Colloidal silica is contained in the amount of 50 parts by mass to 120 parts by mass per 100 parts by mass of the above phosphate in terms of solid content of SiO₂. With a content of less than 50 parts by mass, the effect of reducing the thermal expansion coefficient of the insulating coating is limited, and sufficient tension cannot be imparted to the steel sheet. Therefore, an iron loss reduction effect cannot be obtained by forming an insulating coating. By contrast, if the content exceeds 120 parts by mass, not only will the insulating coating easily crystallize during baking, but the moisture absorption resistance will deteriorate as well.

In the disclosure, it is important to contain water-soluble metal salts of metallic elements so that the molar ratio between bivalent element M²⁺ (= Mg, Ca, Ba, Sr, Zn, Mn) and/or trivalent element M³⁺ (= Al) which are metallic elements contained in the treatment solution and P is 0.6 ≤ (M²⁺ + 1.5 × M³⁺) / P ≤ 1.0. In the above formula, the value of M for a trivalent metal is converted into 1.5 times of that of a bivalent metal so that they match.
If M/P is less than 0.6, the elution amount of phosphorus increases, and the moisture absorption resistance deteriorates. On the other hand, if M/P is larger than 1.0, the insulating coating crystallizes and causes a reduction in the tension imparted to the steel sheet and leads to deterioration in iron loss properties.

As a metal salt for adjusting M/P, since the treatment solution for insulating coating is an aqueous solution, a water-soluble metal salt is used. Further, as the metal salt, nitrate, acetate or chloride are used since they are easily available and low in cost.

Further, regarding the above treatment solution for insulating coating, Ti is contained in the amount of 25 parts by mass or less per 100 parts by mass of phosphate in terms of TiO₂ in order to further improve moisture absorption resistance. If the Ti content exceeds 25 parts by mass, the improving effect reaches a plateau, and becomes disadvantageous from the viewpoint of manufacturing costs. It is further preferable for the Ti content to be 5 parts by mass or more because with said amount, the effect of adding Ti is remarkable.

In containing Ti in the treatment solution for insulating coating, TiO₂ sol is preferable in terms of availability, costs and the like. Although the pH of TiO₂ sol may be acidic, neutral or alkaline, pH is preferably between 5.5 and 12.5.
Further, in order to enhance the dispersibility of TiO₂ particles, and further to enhance the compatibility between TiO₂ and phosphate to enhance the stability of the treatment solution for insulating coating, it is preferable for the TiO₂ sol to contain titanium phosphate in a solid mass ratio of 0.1 % to 50 % with respect to TiO₂. If the titanium phosphate content is less than 0.1 %, the effect of enhancing compatibility is poor, whereas if said content exceeds 50 %, it leads to an increase in costs.

Further, since inorganic mineral particles such as silica and alumina are effective for improving sticking resistance, they can be used in combination. However, the amount of the inorganic mineral particles added is preferably 1 part by mass with respect to 20 parts by mass of colloidal silica at most in order to prevent a decrease in the stacking factor.

The above treatment solution is applied to the surface of the electrical steel sheet and then baked to form insulating coating. The total coating amount of both sides of the steel sheet is preferably 4 g/m² to 15 g/m². This is because if the coating amount is less than 4 g/m², the interlaminar resistance decreases, whereas if it is more than 15 g/m², the stacking factor decreases.
The baking treatment for insulating coating formation may be performed for the purpose of flattening annealing, and the temperature range is 800 °C to 1000 °C and the soaking time is 10 seconds to 300 seconds. If the temperature is too low or the soaking time is too short, the flattening will be insufficient, shape failure will be caused and result in a decrease in yield. On the other hand, if the temperature is too high, the effect of flattening annealing becomes excessive and therefore causes creep deformation to deteriorate magnetic properties.

### EXAMPLES

### (Reference Example 1)

Grain-oriented electrical steel sheets subjected to final annealing with sheet thickness of 0.23 mm were prepared. The magnetic flux density B₈ of the grain-oriented electrical steel sheets at this time was 1.912 T. The grain-oriented electrical steel sheets were subjected to pickling in phosphate acid, and then various treatment solutions for chromium-free insulating coating shown in Table 2 were applied on both sides so that the total coating amounts of both sides were 10 g/m². Then, in an atmosphere of N₂: 100 %, baking treatment was performed at 850 °C for 30 seconds. Then, in an atmosphere of N₂: 100 %, the steel sheets were subjected to stress relief annealing at 800 °C for 2 hours.

As phosphate, primary phosphate solutions were used for each sample, and the amounts thereof are shown in terms of solid content. In adjusting M/P, magnesium nitrate hexahydrate, calcium acetate monohydrate, barium acetate monohydrate, strontium chloride, zinc chloride, aluminum sulfate (anhydrous salt), manganese nitrate hexahydrate were used for each steel sheet so that the molar ratio between metallic elements derived from phosphate will not change (for example, the components were added so that, when the molar ratio between Mg and Ca derived from magnesium phosphate and calcium phosphate is 1:1, the molar ratio between Mg and Ca derived from magnesium nitrate and calcium acetate is also 1:1).

The results of examining the characteristics of the grain-oriented electrical steel sheets thus obtained are shown in Table 3.

The evaluation of each characteristic was performed in the following way.
- W_{17/50} (R): iron loss right before application of treatment solution for insulating coating
- ΔW after application = W_{17/50} (C) - W_{17/50} (R) where W_{17/50} (C): iron loss right after baking for insulating coating formation
- ΔW after stress relief annealing = W_{17/50} (A) - W_{17/50} (R) where W_{17/50} (A): iron loss right after stress relief annealing
- Elution amount of phosphorus: three sample pieces with a size of 50 mm × 50 mm were boiled in distilled water at 100 °C for 5 minutes and then examined
- Coating appearance: degree of transparency of insulating coating after stress relief annealing determined by visual observation

### [Table 2]

**Table 2**

| No. | phosphate in terms of solid content (g) | | | | | | | colloidal silica in terms of solid content of SiO₂ (g) | M/P | remarks |
|---|---|---|---|---|---|---|---|---|---|---|
| | magnesium phosphate | calcium phosphate | barium phosphate | strontium phosphate | zinc phosphate | aluminum phosphate | manganese phosphate | | | |
| 1 | 100 | - | - | - | - | - | - | 60 | 0.50 | comparative example |
| 2 | 100 | - | - | - | - | - | - | 60 | 0.60 | reference example |
| 3 | 70 | - | - | - | - | - | 30 | 60 | 0.75 | reference example |
| 4 | 80 | 20 | - | - | - | - | - | 60 | 0.91 | reference example |
| 5 | 100 | - | - | - | - | - | - | 60 | 1.00 | reference example |
| 6 | 100 | - | - | - | - | - | - | 60 | 1.10 | comparative example |
| 7 | 50 | - | - | - | - | 50 | - | 50 | 0.65 | reference example |
| 8 | 50 | - | - | - | 50 | - | - | 50 | 0.68 | reference example |
| 9 | 100 | - | - | - | - | - | - | 30 | 0.70 | comparative example |
| 10 | 100 | - | - | - | - | - | - | 50 | 0.95 | reference example |
| 11 | 100 | - | - | - | - | - | - | 50 | 0.80 | reference example |
| 12 | - | - | - | - | - | 100 | - | 40 | 0.70 | comparative example |
| 13 | 60 | - | - | - | - | 40 | - | 100 | 0.70 | reference example |
| 14 | 100 | - | - | - | - | - | - | 120 | 0.70 | reference example |
| 15 | 100 | - | - | - | - | - | - | 140 | 0.70 | comparative example |
| 16 | - | 30 | - | - | - | - | 70 | 50 | 0.55 | comparative example |
| 17 | - | 50 | - | - | - | 50 | - | 50 | 0.65 | reference example |
| 18 | - | - | 100 | - | - | - | - | 120 | 0.58 | comparative example |
| 19 | - | - | - | 100 | - | - | - | 120 | 0.60 | reference example |
| 20 | - | - | - | - | 100 | - | - | 120 | 0.95 | reference example |

### [Table 3]

**Table 3**

| No. | W_{17/50} (R) before application (W/kg) | ΔW after application (W/kg) | ΔW after stress relief annealing (W/kg) | elution amount of phosphorus (µg/150cm²) | coating appearance | remarks |
|---|---|---|---|---|---|---|
| 1 | | -0.032 | -0.035 | 3050 | transparent | comparative example |
| 2 | | -0.031 | -0.029 | 82 | transparent | reference example |
| 3 | | -0.032 | -0.030 | 83 | transparent | reference example |
| 4 | | -0.029 | -0.026 | 78 | transparent | reference example |
| 5 | | -0.033 | -0.031 | 75 | transparent | reference example |
| 6 | | -0.018 | 0.019 | 70 | clouded (crystallized) | comparative example |
| 7 | | -0.028 | -0.027 | 75 | transparent | reference example |
| 8 | | -0.035 | -0.033 | 78 | transparent | reference example |
| 9 | | 0.000 | 0.000 | 63 | transparent | comparative example |
| 10 | 0.840 | -0.035 | -0.030 | 65 | transparent | reference example |
| 11 | | -0.035 | -0.036 | 68 | transparent | reference example |
| 12 | | -0.001 | 0.000 | 75 | transparent | comparative example |
| 13 | | -0.035 | -0.035 | 60 | transparent | reference example |
| 14 | | -0.028 | -0.030 | 70 | transparent | reference example |
| 15 16 | | -0.005 | 0.000 | 110 | clouded (crystallized) | comparative example |
| | | -0.031 | -0.029 | 2860 | transparent | comparative example |
| 17 | | -0.033 | -0.030 | 70 | transparent | reference example |
| 18 | | -0.029 | -0.030 | 2500 | transparent | comparative example |
| 19 | | -0.028 | -0.031 | 73 | transparent | reference example |
| 20 | | -0.032 | -0.029 | 76 | transparent | reference example |

As shown in Tables 2 and 3, by adjusting the M/P ratio to a range of 0.6 to 1.0 and containing colloidal silica in the amount of 50 parts by mass to 120 parts by mass in terms of solid content of SiO₂, chromium-free insulating coating with a small elution amount of phosphorus and excellent moisture absorption resistance and good appearance was obtained.

### (Example 2)

Grain-oriented electrical steel sheets subjected to final annealing with sheet thickness of 0.23 mm were prepared. The magnetic flux density B₈ of the grain-oriented electrical steel sheets at this time was 1.912 T. The grain-oriented electrical steel sheets were subjected to pickling in phosphate acid, and then various treatment solutions for chromium-free insulating coating shown in Table 4 were applied on both sides so that the total coating amounts of both sides were 12 g/m². Then, in an atmosphere of N₂: 100 %, baking treatment was performed at 900 °C for 60 seconds. Then, in an atmosphere of N₂: 100 %, the steel sheets were subjected to stress relief annealing at 800 °C for 2 hours.

As phosphate, a primary magnesium phosphate solution was used in an amount of 100 g in terms of solid content. In adjusting M/P, magnesium acetate tetrahydrate was used. As the Ti source, titania sol TKS-203 manufactured by Tayca Corporation was used in the amounts shown in Table 4 in terms of solid content.

The results of examining the characteristics of the grain-oriented electrical steel sheets thus obtained are also shown in Table 4.

The evaluation of each characteristic was conducted in the same way as example 1.

### [Table 4]

**Table 4**

| No. | colloidal silica in terms of solid content of SiO₂ (g) | magnesium acetate tetrahydrate (g) | TiO₂ sol in terms of solid content (g) | M/P | W_{17/50} (R) before application (W/kg) | ΔW after application (W/kg) | ΔW after stress relief annealing (W/kg) | elution amount of P (µg/150cm²) | coating appearance | remarks |
|---|---|---|---|---|---|---|---|---|---|---|
| 1 | 60 | 0 | 0 | 0.50 | | -0.032 | -0.035 | 3050 | transparent | comparative example |
| 2 | 60 | 20 | 0 | 0.60 | | -0.031 | -0.029 | 85 | transparent | reference example |
| 3 | 60 | 50 | 0 | 0.75 | | -0.030 | -0.030 | 82 | transparent | reference example |
| 4 | 60 | 95 | 0 | 0.98 | | -0028 | -0.026 | 80 | transparent | reference example |
| 5 | 60 | 120 | 0 | 1.11 | | -0.008 | 0.018 | 75 | clouded (crystallized) | comparative example |
| 6 | 60 | 20 | 3 | 0.60 | 0.840 | -0.028 | -0.027 | 82 | transparent | example |
| 7 | 60 | 20 | 5 | 0.60 | | -0.035 | -0.033 | 20 | transparent | example |
| 8 | 60 | 20 | 15 | 0.60 | | -0.033 | -0.033 | 18 | transparent | example |
| 9 | 60 | 20 | 25 | 0.60 | | -0.035 | -0.030 | 10 | transparent | example |
| 10 | 50 | 0 | 20 | 0.50 | | -0.028 | -0.027 | 2970 | transparent | comparative example |
| 11 | 50 | 30 | 20 | 0.65 | | -0.035 | -0.035 | 15 | transparent | example |
| 12 | 120 | 30 | 20 | 0.65 | | -0.028 | -0.030 | 18 | transparent | example |
| 13 | 140 | 30 | 20 | 0.65 | | -0.003 | 0.006 | 25 | clouded (crystallized) | comparative example |

As shown in Table 4, by adjusting the M/P ratio to a range of 0.6 to 1.0 and containing colloidal silica in the amount of 50 parts by mass to 120 parts by mass in terms of solid content of SiO₂, chromium-free insulating coating with a small elution amount of phosphorus and excellent moisture absorption resistance and good appearance was obtained. Further, by containing Ti in the amount of 25 parts by mass or less in terms of TiO₂, it was possible to further reduce the elution amount of phosphorus.

### INDUSTRIAL APPLICABILITY

Regarding the problem of deterioration in moisture absorption resistance (increase in elution amount of phosphorus) in the insulating coating applied on grain-oriented electrical steel sheets which becomes an issue when containing no Cr, by adjusting the M/P ratio so that it is on the M rich (P poor) side, chromium-free insulating coating with excellent moisture absorption resistance and iron loss improving effect can be obtained while minimizing the amount of expensive titanium used.

## Claims

1. A treatment solution for chromium-free insulating coating for grain-oriented electrical steel sheet containing one or more of a Mg phosphate, Ca phosphate, Ba phosphate, Sr phosphate, Zn phosphate, Al phosphate, and Mn phosphate and Ti in an amount of 25 parts by mass or less per 100 parts by mass of the phosphate in terms of TiO₂, wherein
colloidal silica is contained in an amount of 50 parts by mass to 120 parts by mass per 100 parts by mass of the phosphate in terms of solid content of SiO₂, and a water-soluble metal salt of Mg, Ca, Ba, Sr, Zn, Al, and Mn is contained to adjust the molar ratio between M²⁺ (= Mg, Ca, Ba, Sr, Zn, Mn) and/or M³⁺ (= Al) which are metallic elements contained in the treatment solution and P to a range of 0.6 ≤ (M²⁺ + 1.5 × M³⁺)/P ≤ 1.0,
wherein the water-soluble metal salt is one or more of nitrate, acetate, and chloride.

2. The treatment solution for chromium-free insulating coating for grain-oriented electrical steel sheet according to claim 1, wherein TiO₂ sol is used as a Ti source.

3. The treatment solution for chromium-free insulating coating for grain-oriented electrical steel sheet according to claim 2, wherein in the TiO₂ sol, titanium phosphate is contained in a solid mass ratio of 0.1 % to 50 % with respect to TiO₂.

4. A grain-oriented electrical steel sheet with chromium-free insulating coating obtainable by applying the treatment solution according to any one of claims 1 to 3 on a surface of a grain-oriented electrical steel sheet subjected to final annealing and performing baking treatment at a temperature of 800 °C or higher and 1000 °C or lower for 10 seconds to 300 seconds.

## Patentansprüche

1. Behandlungslösung für eine chromfreie Isolierbeschichtung für ein kornorientiertes Elektrostahlblech, enthaltend eines oder mehrere aus einem Mg-Phosphat, Ca-Phosphat, Ba-Phosphat, Sr-Phosphat, Zn-Phosphat, Al-Phosphat und Mn-Phosphat und Ti in einer Menge von 25 Massenteilen oder weniger pro 100 Massenteile des Phosphats in Bezug auf TiO₂, worin
Kieselsol in einer Menge von 50 Massenteilen bis 120 Massenteilen pro 100 Massenteilen des Phosphats in Bezug auf den Feststoffgehalt von SiO₂ enthalten ist und ein wasserlösliches Metallsalz von Mg, Ca, Ba, Sr, Zn, Al und Mn enthalten ist, so dass das Molverhältnis zwischen M²⁺ (= Mg, Ca, Ba, Sr, Zn, Mn) und/oder M³⁺ (= Al), die in der Behandlungslösung enthaltene metallische Elemente sind, und P auf einen Bereich von 0,6 ≤ (M²⁺ + 1,5 x M³⁺)/P ≤ 1,0 eingestellt ist,
worin das wasserlösliche Metallsalz eines oder mehrere aus Nitrat, Acetat und Chlorid ist.

2. Behandlungslösung für eine chromfreie Isolierbeschichtung für ein kornorientiertes Elektrostahlblech gemäß Anspruch 1, worin TiO₂-Sol als Ti-Quelle verwendet wird.

3. Behandlungslösung für eine chromfreie Isolierbeschichtung für ein kornorientiertes Elektrostahlblech gemäß Anspruch 2, worin in dem TiO₂-Sol Titanphosphat in einem Feststoffmassenanteil von 0,1% bis 50% in Bezug auf TiO₂ enthalten ist.

4. Kornorientiertes Elektrostahlblech mit chromfreier Isolierbeschichtung, erhältlich durch Auftragen der Behandlungslösung gemäß mindestens einem der Ansprüche 1 bis 3 auf eine Oberfläche eines endgeglühten kornorientierten Elektrostahlblechs und Durchführen einer Einbrennbehandlung bei einer Temperatur von 800°C oder höher und 1000°C oder niedriger für 10 Sekunden bis 300 Sekunden.

## Revendications

1. Solution de traitement pour la formation d'un film de revêtement isolant exempt de chrome sur une tôle d'acier électromagnétique à grains orientés contenant un ou plusieurs d'un phosphate de Mg, d'un phosphate de Ca, d'un phosphate de Ba, d'un phosphate de Sr, d'un phosphate de Zn, d'un phosphate d'Al et d'un phosphate de Mn et du Ti en une quantité de 25 parties en masse ou moins pour 100 parties en masse du phosphate en termes de TiO₂, dans lequel
de la silice colloïdale est contenue en une quantité de 50 parties en masse à 120 parties en masse pour 100 parties en masse du phosphate en termes de teneur en SiO₂ solide, et un sel hydrosoluble de métal de Mg, Ca, Ba, Sr, Zn, Al et Mn est contenu pour ajuster le rapport molaire entre M²⁺ (= Mg, Ca, Ba, Sr, Zn, Mn) et/ou M³⁺ (= Al) qui sont les éléments métalliques contenus dans le liquide de traitement et P dans une plage de 0,6 ≤ (M²⁺ + 1,5 × M³⁺)/P ≤ 1,0,
dans laquelle le sel hydrosoluble de métal est un ou plusieurs d'un nitrate, d'un acétate et d'un chlorure.

2. Solution de traitement pour la formation d'un film de revêtement isolant exempt de chrome sur une tôle d'acier électromagnétique à grains orientés selon la revendication 1, dans laquelle un sol de TiO₂ est utilisé en tant que source de Ti.

3. Solution de traitement pour la formation d'un film de revêtement isolant exempt de chrome sur une tôle d'acier électromagnétique à grains orientés selon la revendication 2, dans laquelle dans le sol de TiO₂, du phosphate de titane est contenu en un rapport de masse solide de 0,1 % à 50 % par rapport au TiO₂.

4. Tôle d'acier électromagnétique à grains orientés revêtue d'un film isolant exempt de chrome pouvant être obtenu par application de la solution de traitement selon l'une quelconque des revendications 1 à 3 sur une surface d'une tôle d'acier électromagnétique à grains orientés soumise à un recuit final et réalisation d'un traitement de cuisson à une température de 800 °C ou supérieure et de 1000 °C ou inférieure pendant 10 secondes à 300 secondes.
